# EUROPEAN PATENT SPECIFICATION

(11) **EP 4 689 543 B1**
(45) Date of publication and mention of the grant of the patent: **16.09.2026**
(21) Application number: 24716237.3
(22) Date of filing: 28.03.2024
(51) Int. Cl.: G01B 9/02091, G01B 9/02004, G01B 9/02

(54) **OPTICAL COHERENCE TOMOGRAPHY SYSTEM FOR RANGING APPLICATIONS**
OPTISCHES KOHÄRENZTOMOGRAFIESYSTEM FÜR ENTFERNUNGSMESSUNGSANWENDUNGEN
SYSTÈME DE TOMOGRAPHIE PAR COHÉRENCE OPTIQUE POUR APPLICATIONS DE TÉLÉMÉTRIE

(30) Priority: 05.04.2023 IT 202300006702
(43) Date of publication of application: 11.02.2026
(73) Proprietor: Careglance Srl, 20135 Milano (IT)
(72) Inventor: ACHINI, Federico, 20135 Milano (IT); IANNONE, Eugenio, 20135 Milano (IT)
(74) Representative: Tirloni, Bartolomeo
(86) International application number: PCT/IB2024/053032
(87) International publication number: WO 2024/209324

(56) References cited:
- US-A1- 2014 104 593
- HIT NAYAK AND CHANDRA SEKHAR SEELAMANTULA: "Optimal sparsifying bases for frequency-domain optical-coherence tomography", OPTICS LETTERS, OPTICAL SOCIETY OF AMERICA, US, vol. 37, no. 23, 1 December 2012 (2012-12-01), pages 4907 - 4909, XP001579103, ISSN: 0146-9592, [retrieved on 20121127], DOI: 10.1364/OL.37.004907
- KE JUN ET AL: "Image reconstruction from nonuniformly spaced samples in Fourier domain optical coherence tomography", COMPUTATIONAL IMAGING X, SPIE, 1000 20TH ST. BELLINGHAM WA 98225-6705 USA, vol. 8296, no. 1, 9 February 2012 (2012-02-09), pages 1 - 8, XP060001946, DOI: 10.1117/12.907331
- HARFOUCHE MARK ET AL: "Compressive sensing optical coherence tomography using randomly accessible lasers", vol. 9109, 23 May 2014 (2014-05-23), pages 91090L, XP093090017, ISSN: 0277-786X, Retrieved from the Internet <URL:http://dx.doi.org/10.1117/12.2048754> DOI: 10.1117/12.2048754

## Description

### Technical field

The present disclosure generally relates to an Optical Coherence Tomography (OCT) system, such as a "Swept Source - Optical Coherence Tomography" (SS-OCT) system. More particularly, the present disclosure relates to a SS-OCT system adapted to be used in ranging applications, i.e., applications in which either the shape of a surface or the distance of an object has to be determined.

### Background art

A SS-OCT system uses a coherent light signal to capture two and three dimensional images of a sample (the sample being any object or material or biological tissue under test), in particular when a non-destructive testing of the sample is needed.

A conventional SS-OCT system comprises a light source (such as a wavelength-swept laser source) configured to generate the coherent light signal.

A conventional SS-OCT system also comprises an optical interferometer. According to a typical configuration, the optical interferometer comprises a reference arm leading to a reference reflector (for example, a reference mirror), a sample arm leading to the sample, and a beam splitter configured to split the coherent light signal into a reference forward signal directed to the reference arm, and into a sample forward signal directed to the sample arm. Other optical interferometer configurations may also be envisaged.

A conventional SS-OCT system further comprises an optical detector (such as an optical homodyne receiver, particularly a balanced optical homodyne receiver) configured to detect an interference signal generated by a combination of a reference return signal returning from the reference arm after reflection (of the reference forward signal) by the reference reflector, and a sample return signal returning from the sample arm after reflection or backscattering (of the sample forward signal) by the sample.

A processing unit is configured to perform an image reconstruction or synthesis procedure (hereinafter concisely referred to as reconstruction procedure) aimed at providing, based on the detected interference signal, one or more images of the sample.

An optical scanning element (referred to as optical scanner) is typically provided (e.g., between an end of the sample arm and the sample) to scan the sample forward signal on the sample. According to a typical operation mode, the optical scanner is configured to direct the sample forward signal to a target point in a resting plane where the sample at least partially lies, so as to obtain an axial scan (A-scan) based on a profile of the corresponding sample return signal as a function of a direction (or depth) orthogonal to the resting plane; after the end of an A-scan, the optical scanner is moved to a different target point in the resting plane, so as to perform another A-scan.

A set of A-scans associated with neighboring target points in the sample may be used, by the reconstruction procedure, to generate a cross-sectional image of the sample (referred to as B-scan), and a set of B-scans through the resting plane may be used by the reconstruction procedure to generate a tridimensional (3D) image of the sample (referred to as C-scan).

The reconstruction procedure is essentially based on inverting (and solving) the equation providing the detected interference signal as a function of the reflectivity of the sample.

A known approach for solving the equation of the detected interference signal is solving the equation in the Fourier domain.

Further methods for solving the equation of the detected interference signal are known from H. Nayak and D. C. S. Seelamantula: "Optimal sparsifying bases for frequency-domain optical-coherence tomography", Opt. Lett. vol. 37, no. 23 (2012-12-01), pages 4907-4909, K. Jun et al: "Image reconstruction from nonuniformly spaced samples in Fourier domain optical coherence tomography", Computational Imaging X, SPIE vol. 8296, no. 1 (2012-02-09), pages 1-8, and US 2014/104593 A1.

### Summary of the invention

The Applicant believes that solving the equation of the detected interference signal in the Fourier domain could be an unsatisfactory approach for some applications, like ranging applications, for the following reasons.

Firstly, in order to avoid wrong image reconstruction in real SS-OCT systems, one or more compensation techniques should be used, aimed at compensating non-linear dependency of frequency from time exhibited by a typical wavelength-swept laser source, and/or one aimed at compensating SS-OCT system frequency response decreases with frequency (due, for example, to frequency responses of electronic components of the optical detector).

Secondly, solving the equation of the detected interference signal in the Fourier domain allows estimating a smooth, continuous reflectivity function of the sample, which could be not suitable for applications, such as ranging applications, in which the sample comprises one or more sample reflectors (i.e., one or more reflective layers within the sample that can be reached by light signals from the sample arm and that can reflect the light signals back into the sample arm) and in which the position and reflectivity of each sample reflector have to be determined or estimated with a certain accuracy. Examples of ranging applications include laser welding monitoring applications, manufacturing monitoring applications, and obstacle monitoring applications.

In view of the above, the Applicant has investigated an alternative approach, which is based on solving the equation of the detected interference signal in the time domain.

In doing so, a numerical problem arises, and this problem is inherently present due to the ill conditioned nature of the equation of the detected interference signal (which is essentially a Fredholm equation of the first type with a sinusoidal kernel).

In view of the above, the Applicant has devised a SS-OCT system capable of overcoming the above-mentioned, as well as other issues.

One or more aspects of the present disclosure are set out in the independent claims, with advantageous features of the same disclosure that are indicated in the dependent claims, whose wording is enclosed herein verbatim by reference (with any advantageous feature being provided with reference to a specific aspect of the present disclosure that applies mutatis mutandis to any other aspect thereof).

An aspect of the present disclosure relates to a Swept-Source Optical Coherence Tomography (SS-OCT) system according to claim 1.

According to an embodiment, each function of said number of functions is selected at a respective one of a number of iterations equal to said number of at least one sample reflector.

According to an embodiment, each function of said number of functions is selected, at the respective iteration, as the function, in the dictionary of functions, having highest correlation with a residual indicative of a difference between the interference signal and a combination of all the functions selected in preceding iterations.

According to an embodiment, each function of said number of functions is selected, at the respective iteration, as the function, in the dictionary of functions, having highest correlation with the residual and lowest phase component. According to an embodiment, the processing unit is configured to determine the approximated interference signal based on Matching Pursuit algorithm.

According to an embodiment, the at least one sample reflector comprises a single sample reflector.

According to an embodiment, the processing unit is further configured to provide one or more ranging measurements of the sample based on the position and/or reflectivity information associated with each one of said at least one sample reflector.

According to an embodiment, said one or more ranging measurements comprises distance and/or reflectivity measurements for laser welding monitoring applications and/or for sintering monitoring applications and/or for obstacle monitoring applications.

Another aspect of the present disclosure relates to a method for processing an interference signal according to claim 8.

### Brief description of the drawings

These and other features and advantages of the disclosure will be made apparent by the following description of some exemplary and non-limitative embodiments thereof. For its better intelligibility, the following description should be read making reference to the attached drawings, wherein:
**Figure 1** schematically shows a system according to embodiments of the present disclosure;
**Figure 2** shows an activity diagram of a reconstruction procedure implemented by the system according to embodiments of the present disclosure;
**Figures 3A** and **3B** show simulation results of the reconstruction procedure with different noise conditions, and
**Figure 3C** shows simulation results of reflector position accuracy as a function of the sweep bandwidth, for different noise conditions.

### Detailed description of exemplary embodiments

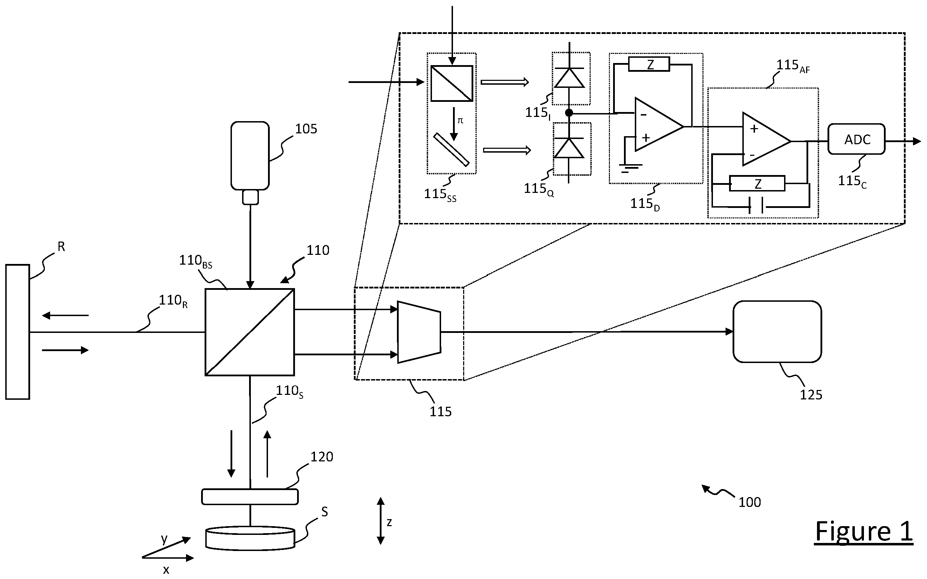

With reference to the drawings, **Figure** 1 schematically shows a system **100** according to embodiments of the present disclosure. In the example here considered, the system **100** is an "Optical Coherence Tomography" (OCT) system, particularly a "Swept Source - Optical Coherence Tomography" (SS-OCT) system.

In the following, when one or more features of the system **100** (and of a reconstruction procedure implemented by it) are introduced by the wording "according to an embodiment", they are to be construed as features additional or alternative to any features previously introduced, unless otherwise indicated and/or unless there is evident incompatibility among feature combinations that is immediately apparent to the person skilled in the art.

The system **100** comprises a light source **105** configured to generate a coherent light signal (*e.g*., a light beam), such as an infrared light signal.

According to an embodiment, the light source **105** comprises a laser source. In the exemplary considered embodiment in which the system **100** comprises a SS-OCT system, the light source **105** may comprise a wavelength-swept laser source.

The system **100** comprises an optical interferometer **110.**

The optical interferometer **110** comprises a reference arm **110_{R}** leading to a reference reflector **R** (the reference reflector **R** being for example at an end of the reference arm **110_{R}**).

According to an embodiment, the reference reflector **R** comprises a reference mirror.

The optical interferometer **110** comprises a sample arm **110_{S}** leading to a sample **S** (the sample S being for example at an end of the sample arm **110_{S}**).

According to an embodiment, the reference arm **110_{R}** and/or the sample arm **110_{S}** may comprise optical fibers. Without losing generality, the sample **S** may be or comprise any object or material or biological tissue under analysis or under test or under measurement.

The sample **S** comprises one or more sample reflectors, up to a continuous distribution of sample reflectors. For example, one or more discrete reflective layers may be present within the sample that can be reached by light signals from the sample arm **110_{S}** and that can reflect the light signals back into the sample arm **110_{S}**. Without losing generality, the number of sample reflectors may depend on one or more structural features of the sample **S.** Examples of structural features of the sample **S** include, but are not limited to, shape, material, and composition of the sample **S.**

According to an embodiment, the optical interferometer **110** comprises a beam splitter **110_{BS}**.

According to an embodiment, the beam splitter **110_{BS}** is configured to split the coherent light signal (from the light source **105)** into a reference forward signal directed to the reference arm **110_{R}**, and into a sample forward signal directed to the sample arm **110_{S}**.

The system **100** comprises an optical detector **115** configured to detect an interference signal generated by a combination of a reference return signal returning from the reference arm **110_{R}** after reflection (of the reference forward signal) by the reference reflector **R,** and a sample return signal returning from the sample arm **110_{S}** after reflection or backscattering (of the sample forward signal) by the sample **S** (*i.e.,* by the respective sample reflector(s)).

According to an embodiment, the optical detector **115** comprises an optical homodyne receiver, particularly a balanced optical homodyne receiver.

An exemplary embodiment of the optical detector **115 is** schematically illustrated in the enlarged view of **Figure 1****.**

According to an embodiment, the optical detector **115** comprises a splitting/shifting arrangement **115_{SS}** for splitting and phase shifting the interference signal (from the reference **110_{R}** and sample **110_{S}** arms) into first and second interference signals.

According to an embodiment, the optical detector **115** comprises a first photodiode **115_{I}** configured to receive the first interference signal, and to generate a corresponding detection current.

According to an embodiment, the optical detector **115** comprises a second photodiode **115_{Q}** configured to receive the second interference signal, and to generate a corresponding detection current.

According to an embodiment, the first and second photodiodes (hereinafter, also referred to as photodiodes **115_{R}**, **115_{S}**) are identical photodiodes.

According to an embodiment, the photodiodes **115_{R}**, **115_{S}** have opposite electrical polarizations.

According to an embodiment, the optical detector **115** comprises a transimpedance amplifier **115_{D}** configured to subtract the detection currents to each other (thus obtaining a corresponding detected interference current), and to convert (preferably with an amplification factor) the detected interference current into a corresponding voltage signal.

According to an embodiment, the optical detector **115** comprises an amplification and filtering stage **115_{AF}** (for example, a narrow-band, high gain amplifier) for amplifying the voltage signal, and for filtering it from noise and/or disturbances due to phase shifting at the splitting/shifting arrangement **115_{SS}** and/or to subtraction operation at the transimpedance amplifier **115_{D}**.

According to an embodiment, the optical detector **115** comprises an analog to digital converter **115_{C}** configured to convert (by sampling and quantization operations) the (analog) amplified voltage signal into a corresponding digital signal (which represents the detected interference signal) adapted to be processed by a processing unit (discussed here below), the detected interference signal thus representing a digital and processed version of the detected interference current.

According to an embodiment, the system **100** comprises (*e.g.*, between the end of the sample arm **110_{S}** and the sample **S)** an optical scanning element (referred to as optical scanner) **120** configured to scan the sample forward signal on the sample **S.**

According to an embodiment, the optical scanner **120** is configured to direct the sample forward signal to a target point in a **x-y** plane where the sample **S** at least partially lies. A profile of the corresponding sample return signal as a function of a **z** direction (or depth), orthogonal to the **x-y** plane, identifies a respective axial scan (A-scan).

According to an embodiment, after the end of an A-scan, the optical scanner **120** is configured to be moved, *e.g.*, along the **x** direction, to a different target point in the **x-y** plane, so as to perform another A-scan.

According to an embodiment, a set of A-scans associated with neighboring target points in the sample **S** may be used (*e.g.,* by a reconstruction procedure running at a processing unit, discussed here below) to generate a cross-sectional image of the sample **S** (referred to as B-scan).

According to an embodiment, a set of B-scans through the **x-y** plane may be used (*e.g.,* by the reconstruction procedure) to generate a tridimensional (3D) image of the sample **S** (referred to as C-scan).

The system **100** comprises a processing unit **125.**

For the purposes of the present disclosure, the processing unit **125** is configured to perform a reconstruction procedure aimed at providing, based on the detected interference signal, one or more ranging measurements associated with the sample **S** and/or one or more images of the sample **S** (such as a B-scan image and/or a C-scan image) including, or based on, the ranging measurements.

Examples of ranging measurements and applications thereof will be discussed in the following.

As mentioned above, the reconstruction procedure may be configured to generate one or more images of the sample **S** by combining different A-scans. In the following, a single A-scan will be considered for ease of description.

The expression of the detected interference current is discussed here below, under the following hypotheses (which are satisfied in real SS-OCT systems):
- no relevant variation of the refraction index is present within the sample **S,** so that no relevant curvature is present in the envelope of the Pointing vector and the light velocity can be assumed constant within the sample **S;**
- the time needed to the light to traverse the sample **S** is much smaller than any other considered time interval and, in particular, it is much smaller than the observation time;
- the complex wave vector of light (reflectivity and refraction index) does not depend on wavelength in the laser sweep bandwidth;
- the coherence length of the light source **105** is much longer than any length travelled by light within the sample **S;**
- the linewidth of the light source **105** is negligible.

Moreover, in order to discuss the expression of the detected interference current, all the electric fields are assumed to be linearly polarized along the same polarization. As can be easily verified, this assumption provides a simplification that does not limit the validity of the discussion.

Assuming that the electric field emitted by the light source **105** is frequency modulated by a linear modulation in time t (sweep), the electric field frequency *f*(*t*), the wave vector module *k(t)* in the sample **S,** and the wave vector module *k*₀(*t*) in air can be written as: $f \left(t\right) = φ t + {f}_{0}$ $k \left(t\right) = 2 π \frac{n f \left(t\right)}{c} = 2 π \left(\frac{n φ t}{c}+\frac{n {f}_{0}}{c}\right)$ ${k}_{0} \left(t\right) = 2 π \frac{f \left(t\right)}{c} = 2 π \left(\frac{φ t}{c}+\frac{{f}_{0}}{c}\right)$ where:
*φ* is the optical frequency sweep speed (generally measured in GHz/ns);
*φ t* is the optical frequency bandwidth;
*n* is the sample refractive index;
c the speed of light in vacuum, and
*f*₀ is the absolute optical frequency, that is the optical frequency at the beginning of the frequency sweep.

Assuming a perfectly balanced optical interferometer, the electric field ${{E}^{⇀}}_{R}$ received at the optical detector 115 from the reference arm **110_{R}** of the optical interferometer **110** can be written as: ${{E}^{⇀}}_{R} = A exp \left[-ι\left(2 π f\left(t\right)t-{k}_{0}\left(t\right)L\right)\right] \vec{p}$ where is the imaginary unit and *̅p̅*̅ is the polarization unit vector.

The electric field *E̅_{S}* received at the optical detector **115** from the sample arm **110_{S}** of the optical interferometer **110,** and resulting from superposition of reflections from each sample reflector, can be written as: ${\vec{E}}_{S} = A \vec{p} {\int }_{- {L}_{c} / 2}^{{L}_{c} / 2} \dot{r} \left(z\right) exp \left[-ι\left(2 π f\left(t\right)t-{k}_{0}\left(t\right)L-2 k\left(t\right)z\right)\right] dz$ where *L_{c}* is the sample depth, and the average reflectivity *r̅* of the sample between spatial coordinates *z₁* and *z₂* along the z direction (with *z₂*>*z₁*) is given by: $\overline{r} = \frac{1}{{z}_{2} - {z}_{1}} {\int }_{z 1}^{z 2} \dot{r} \left(z\right) dz$

The detection currents generated by the photodiodes **115_{I},115_{Q}** (respectively denoted by *I_{I}*(*t*)*, I_{Q}*(*t*)) take the following expressions: ${I}_{I} \left(t\right) = \frac{1}{2} μ \left[{\left|{{E}^{⇀}}_{R}\right|}^{2}+{\left|{{E}^{⇀}}_{s}\right|}^{2}+\left({{E}^{⇀}}_{R}{{{E}^{⇀}}_{s}}^{*}-{{{E}^{⇀}}_{R}}^{*}{{E}^{⇀}}_{s}\right)\right]$ ${I}_{Q} \left(t\right) = \frac{1}{2} μ \left[{\left|{{E}^{⇀}}_{R}\right|}^{2}+{\left|{{E}^{⇀}}_{s}\right|}^{2}-\left({{E}^{⇀}}_{R}{{{E}^{⇀}}_{s}}^{*}-{{{E}^{⇀}}_{R}}^{*}{{E}^{⇀}}_{s}\right)\right]$ where *µ* is the photodiode responsivity and * indicates the complex conjugate.

After subtraction between the detection currents *I_{I}*(*t*) and *I_{Q}*(*t*)*,* the only current term remaining is the beat between the electric field coming from both reference **110_{R}** and sample **110_{S}** arms of the optical interferometer **110,** i.e., the term containing the information about the A-scan and representing the detected interference current. Assuming ideal filtering and amplification, the detected interference current can be written as: $I \left(t\right) = {A}_{I} {\int }_{- {L}_{c} / 2}^{{L}_{c} / 2} \dot{r} \left(z\right) {rect}_{Θ} \left(t-\frac{Θ}{2}\right) cos \left[2 π φ\frac{2 n z}{c}t+ϕ\left(z\right)\right] dz$ where:
*A_{I}* represents an amplitude of the detected interference current *I*(*t*), and considers the overall analog power gain, the received amplitude, and photodiode efficiency;
*L_{c}* is the sample length;
${rect}_{Θ} \left(t-\frac{Θ}{2}\right)$ is a function that considers the limitation of the detected interference current to a time interval [0, Θ]; *ϕ*(*z*) represents the phase component associated with each harmonic component of the detected interference current, and is given by: $ϕ \left(z\right) = 4 π \frac{n {f}_{0}}{c} z$

From the detected interference current *I*(*t*)*,* the electrical bandwidth *Bₑ* and the Nyquist sampling rate *δt* can be derived as: ${B}_{e} = φ \frac{n {L}_{c}}{c}$ $δt = \frac{1}{2 {B}_{e}} = \frac{c}{2 φ n {L}_{c}}$

Thus, A-scan reconstruction reduces to determination of the unknown function *ṙ*(*z*) from equation (8) where the detected interference current *I*(*t*) is known.

Equation (8) belongs to a class of integral equations called Fredholm equations of the first type (see, for example, Yuan, D., Zhang, X., "An overview of numerical reconstruction procedures for the first kind Fredholm integral equation", SN Appl. Sci. 1, 1178 (2019), https://doi.org/10.1007/s42452-019-1228-3).

Equation (8) in the standard form of the Fredholm equations may be written as: $I \left(t\right) = {A}_{I} {\int }_{- {L}_{c} / 2}^{{L}_{c} / 2} \dot{r} \left(z\right) H \left(t, z\right) dz$ where: $H \left(z, t\right) = {A}_{I} {rect}_{Θ} \left(t-\frac{Θ}{2}\right) cos \left[2 π φ\frac{2 n z}{c}t+ϕ\left(z\right)\right]$ represents the equation Kernel, and is essentially a set of sinusoidal functions observed for a limited time interval (i.e., the time interval [0, Θ]).

As visible from equations (9) and (13), the phase component *ϕ*(z) has a rapid variation as a function of the spatial coordinate z (such a variation being more rapid than that of the time-variant term carrying the useful information, *i.e.,* the term 2 *π φ* (2 *n z*)/*c*), and depends on the absolute optical frequency *f*₀ (which is much greater than the optical frequency bandwidth *φ t*)*.*

The reconstruction procedure performed by the processing unit **125** is based on solving equation (8) in the time domain.

A procedure for solving equation (8) in the time domain may provide for time discretization (which corresponds to a sampling of the detected interference current at a sampling rate *δt*, thereby obtaining a number of time sampling points) and space discretization (*i.e.,* a discretization of the spatial coordinate *z* with a discretization step *δz*, thereby obtaining a number of spatial sampling points).

Assuming a same number of time sampling points and spatial sampling points, and indicating with bold capital letters a matrix and with underlined letters the algebraic vectors (to distinguish them from physical vectors, such as the polarization vector *̅p̅*̅ of equation (3)), then equation (12) may be written as: ${I}_{_} = H {r}_{_} dim \left({I}_{_}\right) = dim \left({r}_{_}\right) = N and dim \left(H\right) = N \times N$ where:
*N* is the number of sampling points;
***H*** is the equation Kernel calculated in the sampling points, and
*r* is the average reflectivity in the spatial interval around a sampling point, and is given by equations (5) and (6).

Assuming that matrix ***H*** is not singular, due to the physical existence of a reflectivity distribution, the equation set (14), which is a square linear equation set, may allow determining the reflectivity at each sampling point.

Although equation set (14) seems to suggest that the only theoretical limitation to system resolution is the sampling rate *δt* (which determines the number of equations of the equation set (14)), and hence that solving the Fredholm equation in the time domain would ensure better results than other approaches (such as approaches based on solving equation (8) in the Fourier domain), the ill conditioned nature of the Fredholm equation when the equation Kernel has the form of a sinusoidal function results in an important numerical problem which limits the dimension of the equation set (14) that is practically solvable (as detailed here below).

Solving the equation set (14) with the Gauss method, the following expression can be obtained: ${r}_{_} = {Y}^{- 1} {{H}_{D}}^{- 1} Y {I}_{_}$ where ***Y*** denotes the linear transformation diagonalizing the equation Kernel ***H**,* the exponent -1 indicates the inverse conjugate, and ***H_{D}*** is the diagonal matrix, whose components are the eigenvalues of the Kernel transformation. Using the coordinate formalism, equation (15) can be written as: ${r}_{s} = {\sum }_{j = 1}^{N} {Y}_{j , s} \frac{{I}_{j}}{{h}_{j}} {Y}_{j , s}^{- 1} j ; s = 1 , … . N$ where *hⱼ* are the eigenvalues of the equation Kernel ***H.*** The eigenvalues depend on the elements of the matrix, that are sinusoidal functions, as expressed by equation (13).

Therefore, the phase component of these functions, which is given by equations (9) and (13), depends on the absolute optical frequency *f*₀ (which is much greater than the time-variant term carrying the useful information, *i.e.,* the term 2 *π φ* (2 *n z)*/*c*)). This implies a large number of periods of the sinusoidal function, thus any error (however small) in the phase component generates a large error in the evaluation of the sinusoidal function (this issue will be also referred to as phase instability).

Back to equation (12), assuming instead a different number of time sampling points and space sampling points, a rectangular linear equation set (rather than the square linear equation set (14)) would be obtained, and *"Singular Values Decomposition"* may be used to solve it (Golub, Gene H., Van Loan, Charles F., (1996), "Matrix Computations" (3rd ed.), Johns Hopkins; Horn, Roger A., Johnson, Charles R., (1985), Section 7.3, "Matrix Analysis", Cambridge University Press. ISBN 978-0-521-38632-6). In any case, the above discussed numerical problem due to the ill conditioned nature of the Fredholm equation, still arises.

According to an embodiment, the reconstruction procedure performed by the processing unit **125** is based on solving equation (8) (the Fredholm equation expressing the detected interference signal) in the time domain according to Compress Sensing (or Compressed Sensing) approach (Emmanuel J. Candès and Michael B. Wakin, "An Introduction to Compressive Sampling", IEEE Signal Processing Magazine [21], March 2008; D. Donoho, "Compressed sensing", IEEE Trans. Inform. Theory, vol. 52, no. 4, pp. 1289-1306, Apr. 2006).

Compress Sensing is based on adding an a-priori knowledge about the problem solution to try to avoid numerical instability. In particular, the following conditions are assumed:
- the solution for the reflectivity is a sparse solution;
- the original reflectivity base and the sparse reflectivity base are incoherent.

A vector ${r}_{_} ∈ {ℝ}^{n}$ is called sparse if at least one orthonormal base Ψ = {*ψₖ, k* = 1, .., *n*} with respect to a given norm exists, so that ${r}_{_} = {\sum }_{k = 1}^{n} {a}_{k} {{ψ}_{_}}_{k}$ and the majority of the coefficients *aₖ* are equal to zero or negligible with respect to the average value of the set of non-negligible coefficients.

Considering the usual expression of the reflectivity as one value for each reflector, it can be seen as the projection of the vector r on a basis constituted by *n* vectors, whose expression is: ${φ}_{k} = {δ}_{k , j}$ where *δ_{k,j}* indicates the Kronecker delta.

Indicating the base Φ = {*φₖ, k =* 1, ..., *n*} as the original reflectivity base, and the base Ψ as the sparse reflectivity base, the original reflectivity base and the sparse reflectivity base are incoherent if the following condition is fulfilled: $μ \left(Ψ, Φ\right) = max \left({{ψ}_{_}}_{k}⋅{{φ}_{_}}_{h}\right) \approx 1 , with {{ψ}_{_}}_{k} ∈ Ψ , {{φ}_{_}}_{h} ∈ Φ .$

Under the above conditions, compress sensing consists in solving the optimization problem discussed here below. Let the detected interference current expressed in equation (12) be considered: ${I}_{_} = H {r}_{_}$ with the equation Kernel ***H*** expressed as (see equation (13)): ${H}_{j , s} = {A}_{I} cos \left[2 π φ\frac{2 n {z}_{j}}{c}{t}_{s}+ϕ\left({z}_{j}\right)\right]$

Let also a number of time sampling points q be considered which is lower than a number of space sampling points m (*i.e., m<q*)*.* As better understood from the following discussion, this allows achieving higher system resolutions with respect to other reconstructions procedures.

Let it be supposed that an orthonormal base Ψ that is incoherent with the original base can be determined, such that: ${r}_{_} = {\sum }_{s = 1}^{q} {a}_{s} {{ψ}_{_}}_{s}$

Indicating with ∥*a*∥₁ the ℓ₁ norm, that is the sum of the absolute values of all the elements of a vector, the optimization problem may be expressed as: ${min}_{a ∈ {ℝ}^{m}} {\left‖{a}_{_}\right‖}_{1}$ under the following condition set: $\left\{\begin{matrix}μ \left(Ψ, Φ\right) \approx 1 \\ {I}_{_} = H {T}_{Ψ \to Φ} Ψ {a}_{_} \\ Sparse \left({a}_{_}\right) = S\end{matrix}\right.$

The first condition of the conditions set (23) (*i.e.,* µ(Ψ, Φ) ≈ 1) means that the bases (Ψ, Φ) are incoherent (**Ψ** being the matrix composed by the vectors of the basis Ψ).

The second condition of the conditions set (23) (*i*.*e*., ***T***_{Ψ→Φ}**Ψ** *a*) identifies a solution of equation (12), where ***T***_{Ψ→Φ} is the base changing matrix from Ψ to Φ.

The third condition of the conditions set (23) (*i.e., Sparse*(*a*) = *S*) means that the number of elements of *a* that are not zero is equal to $S ∈ ℝ$.

If the following condition is verified: $q \geq C {μ}^{2} \left(Ψ, Φ\right) S log m$ where C is a positive constant that can be evaluated numerically (as shown for example in D. Donoho, "Compressed sensing," IEEE Trans. Inform. Theory, vol. 52, no. 4,pp. 1289-1306, Apr. 2006), then **Ψ***a* is a solution of equation (12) that reproduces the correct reflectivity distribution with overwhelming probability (Weisstein, Eric W., "Almost Surely", mathworld.wolfram.com, Retrieved 2019-11-16; *"Math Wiki on asymptotic probability study*")*.*

In practice this means that for values of m not too small, the probability that **Ψ** *a* is a solution of equation (12) that reproduces the correct reflectivity distribution can be assumed to be equal to one.

In other words, although the condition m<q makes equation (12) an indeterminate equation (with infinite solutions, including the searched reflectivity distribution and a multitude of reflectivity distribution functions compatible with equation (12)), according to compress sensing the desired reflectivity distribution is the one, among the infinite solutions of equation (12), that satisfies the optimization problem (22) and the condition set (23).

Otherwise stated, since the reflectivity distribution is assumed to be sparse in the base **Ψ,** only a small number of base vectors contribute to the expression of the detected interference current *l*, as stated by the second condition of the condition set (23). Intuitively, this means that a particular shape of the correlation between each vector of the base **Ψ** and the expression of the detected interference current is expected. In particular, a very low correlation with base vectors that do not contribute to the expression of the detected interference current, and a high correlation with base vectors that contribute to the expression of the detected interference current, are expected - base vector selection through correlation with the detected interference current is a significant aspect of the reconstruction procedure discussed in the following.

Thus, compress sensing substitutes the solution of a linear, ill conditioned problem, with a complex, but well-conditioned, optimization problem (i.e., the optimization problem (22)).

In this respect, the basic principles of the present disclosure may be regarded as determining reflectivity and/or position associated with the sample reflector(s) (or at least a subset thereof) by casting the problem of determining, from the detected interference signal, the sample reflector(s) reflectivity and/or position as a compress sensing problem, and by solving the compress sensing problem according to a suitable compress sensing problem solving approach/algorithm (where the suitability of a given solving approach/algorithm may depend on requested performance and/or processing capability constraints).

A solution of the compress sensing problem may be based on Basic, or Basis, Pursuit algorithm (Shaobing Scott, Chen. L. Donoho, M. Johnstone, Michael A. Saunders, "Atomic Decomposition by Basis Pursuit", SIAM Review· 2001, Vol. 43, No. 1, pp. 129-159).

Another solution of the compress sensing problem may be based on Matching Pursuit (MP) algorithm (Mallat, S. G.; Zhang, Z., (1993), "Matching Pursuits with Time-Frequency Dictionaries", IEEE Transactions on Signal Processing, 1993 (12): 3397-3415; Bergeaud, F.; Mallat, S., (1995), "Matching pursuit of images", Proc. International Conference on Image Processing, 1: 53 - 56).

According to an embodiment, the reconstruction procedure performed by the processing unit **125** is based on solving equation (8) in the time domain according to Compress Sensing approach and according to the solution of the compress sensing problem based on (or inspired to) the Matching Pursuit algorithm.

Matching Pursuit is a sparse approximation algorithm which finds the "best matching" projections of a set of data onto the span of a dictionary *D*, defined as: $D = \left\{{g}_{ν}, ν=1,…,G and ν,G∈ℕ\right\}$ where the dictionary functions *gᵥ*, called "atoms", are not a base in the target space and they are in general not orthogonal.

In the considered case in which the Fredholm equation Kernel is a sinusoidal function, the atoms of the dictionary may be chosen as suitable sinusoidal functions.

Let the following quantities be defined, based on expressions (8) and (9): ${κ}_{j} = 4 π \frac{n}{c} \left({f}_{0}+γ {t}_{j}\right) j = 1 , … , q$ ${ζ}_{i} = \left(i-1\right) \frac{π}{A} i = 1 , … , A and A ∈ ℕ$ where:
- equation (26) reproduces the term inside the sinusoidal function in equation (8), and
- equation (27), with *A* sufficiently large, represents a discretization of the phase component (wherein *i* represents a phase index associated with each one of a plurality *A* of discrete phase components *ζᵢ*). Since the discrete phase component *ζᵢ* does not depend on the absolute optical frequency *f*₀, the phase instability discussed above is avoided. Using the above definitions, the atoms of the dictionary *D* may be written as: ${g}_{\left(j, s, i\right)} = cos \left({κ}_{j} {z}_{s}+{ζ}_{i}\right)$

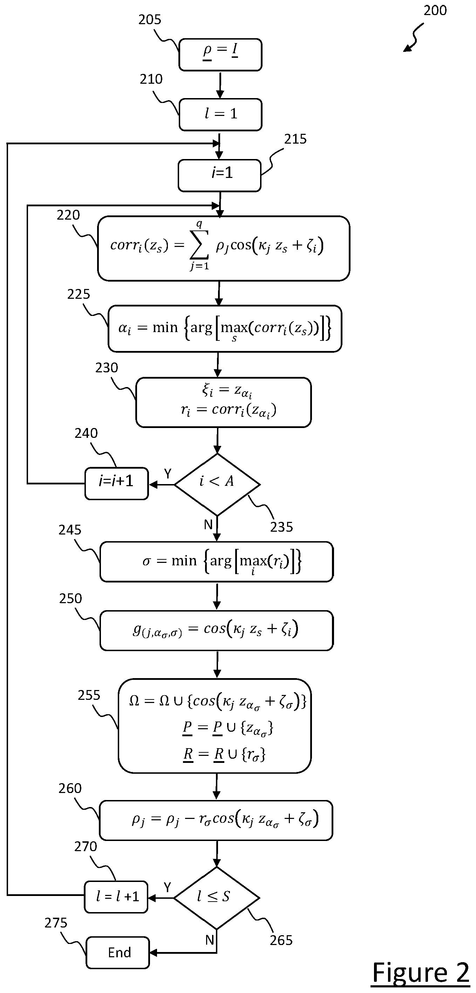

The basic idea of Matching Pursuit algorithm is to approximately represent a signal (such as the detected interference signal) as a weighted sum of a finite number of selected atoms, among the atoms of the dictionary D, that minimize the approximation error. In its general term, assuming the atoms are normalized, this is achieved by finding the atom that has the highest inner product with the signal to be approximated, subtracting from the signal a signal approximation component based on that atom (so as to obtain an amount referred to as "residual"), and repeating the process until the signal is satisfactorily decomposed, *i.e.,* until the norm of the residual is lower than a given approximation target. **Figure 2** shows an activity diagram of the reconstruction procedure **200** implemented by the system **100** (for example, by the processing unit **125)** according to embodiments of the present disclosure.

As mentioned above, the exemplary considered reconstruction procedure **200** is based on (or is inspired to) the Matching Pursuit algorithm. In order to distinguish the Matching Pursuit algorithm - based reconstruction procedure **200** from other reconstruction procedures (which will be recalled in the following discussion for comparative purposes) the reconstruction procedure **200** will be referred to as MP reconstruction procedure.

Broadly speaking, the MP reconstruction procedure **200** is aimed at determining an approximated interference signal associated with the sample **S** as a combination of a number of functions, called atoms in this framework, equal to the number of sample reflectors, wherein each atom describes the interference signal as a sinusoidal function having amplitude and argument respectively associated with reflectivity and position information, the arguments of the sinusoidal functions comprising a plurality of phase components independent of an optical absolute frequency of the coherent light signal, and wherein each atom is associated with a respective sample reflector and is selected from said dictionary of atoms to minimize a difference between the interference signal and the approximated interference signal (*i.e.,* to minimize the residual).

This means obtaining an approximated interference signal in the form: ${I}_{j} = {\sum }_{l = 1}^{S} {r}_{l} cos \left({κ}_{j} {z}_{{s}_{l}}+{ζ}_{{i}_{l}}\right)$ that approximately satisfies the minimum condition (22), where:
*S* is the number of atoms (and corresponds to the number of sample reflectors constituting the reflectivity distribution), wherein *S* ≪ *m* (in that the reflectivity distribution *r* is assumed to be a sparse vector);
*r* represents the reflectivity distribution, and
*l* is the sample reflector index (*l* = 1, ... , *S*; $S ∈ ℕ$).

According to an embodiment, the MP reconstruction procedure **200** comprises setting a residual *ρ* indicative of a difference between the interference signal and every atom so far selected (or, otherwise stated, a difference between the interference signal and current values of the approximated interference signal) at an initial value (action node **205).** According to an embodiment, the initial value of the residual *ρ* corresponds to the interference signal *l* itself *(i.e., ρ = I*), in that no atom has so far been selected at this stage.

Without losing generality, action node **205** may be omitted in basic embodiments. Just as an example, action node **205** may be omitted when *S*=1 (in that, in such a case, a single sample reflector is considered, and thus a single atom has to be selected, and no repetitions are performed, as will be understood from the following discussion).

According to an embodiment, nodes **215-270** (discussed in the following) are repeated for each *l*-th sample reflector (thus obtaining *S* repetitions), *i.e.,* a different sample reflector is considered at each *l*-th repetition. In this embodiment, at each repetition the residual *ρ* is indicative of the difference between the interference signal and every atom so far selected, *i.e.* the difference between the interference signal and all the atoms selected in preceding repetitions.

Broadly speaking, as better discussed in the following, each atom is selected at a respective *l*-th repetition, as the atom, in the dictionary of atoms, having highest correlation with the (current) residual at that *l*-th repetition.

According to an embodiment, the MP reconstruction procedure **200** comprises initializing the sample reflector index *l* (*i.e., l*=1)*,* which means that the first sample reflector is considered at the first running of the procedure (action node **210).**

Without losing generality, action node **210** may be omitted in basic embodiments. Just as an example, action node **210** may be omitted when *S*=1 (in that, in such a case, the sample comprises a single sample reflector, as will be understood from the following discussion).

According to an embodiment, nodes **220-240** (discussed in the following) are iterated for each *i*-th phase index, *i.e.,* a different phase index is considered at each iteration.

According to an embodiment, the MP reconstruction procedure **200** comprises initializing the phase index *i* (*i.e., i*=1)*,* which means that the first one among the plurality of discrete phase components is considered the first (action node **215).**

According to an embodiment, the MP reconstruction procedure **200** comprises determining, for the current phase index *i,* a correlation (as a function of the position information *zₛ*) between the residual *ρ* and each atom of the dictionary with phase shift *ζᵢ* (*ζᵢ* = *ζ₁* in this iteration) (action node **220),** *i.e.:* ${corr}_{i} \left({z}_{s}\right) = {\sum }_{j = 1}^{q} {ρ}_{J} cos \left({κ}_{j} {z}_{s}+{ζ}_{i}\right)$ thereby obtaining, for the atoms with same phase shift *ζᵢ,* a plurality of correlations each one associated with a respective *s*-th position information *zₛ.*

According to an embodiment, the MP reconstruction procedure **200** comprises determining, for the *i*-th phase index, the index *s* of the position information *zₛ* associated with the maximum correlation among the plurality of correlations. Since, due to the sinusoidal nature of the atoms, different maximum correlations (each one for a different position information *zₛ*) may result for each *i*-th phase index (so that different candidate position information *zₛ* may be available for each i-th phase index), the MP reconstruction procedure **200** may comprise determining, for the *i*-th phase index, the smallest index *αᵢ* among the indexes s associated with the candidate position information *zₛ* (action node **225),** *i.e.:* ${α}_{i} = min \left\{arg\left[{max}_{s}\left({corr}_{i}\left({z}_{s}\right)\right)\right]\right\}$

When the first sample reflector (*i.e.,* the sample reflector that intercepts the first the light signal) is considered, determining the smallest index *αᵢ* means determining, for the first sample reflector, the position information *zₛ* indicative of the lowest distance from the light source. As will be better understood from the following discussion, whenever a following repetition of the MP reconstruction procedure 200 is provided for (for example, in order to identify position and reflectivity of a second sample reflector following in depth the first sample reflector), the previously determined position information *zₛ* will not be a candidate position information for the second sample reflector (due to incorporation, in the residual *ρ* at that repetition, of the atom associated with that previously determined position information *zₛ,* and hence to its null or substantially null correlation contribution).

According to an embodiment, the MP reconstruction procedure **200** comprises, at action node **230,** storing the position information *zₛ* associated with the smallest index *αᵢ (i.e., z_{αᵢ}*) (for example, by storing it in a variable *ξᵢ* ) and storing the corresponding (maximum) correlation value (*i.e., corrᵢ*(*z_{αᵢ}*)) (for example, by storing it in a variable *rᵢ*) *i.e.:* ${ξ}_{i} = {z}_{{α}_{i}}$ ${r}_{i} = {corr}_{i} \left({z}_{{α}_{i}}\right)$

According to an embodiment, the MP reconstruction procedure 200 comprises, if (exit branch **Y** of decision node **235)** the *i*-th phase index is lower than the last phase index (*i.e.,* the A phase index), determining the following phase index *(i.e., i=i+1,* action node **240)** and performing nodes **220-240** as such with the following phase index (as conceptually represented in the figure by loop connection between action node **240** and action node **220).**

According to an embodiment, the MP reconstruction procedure **200** comprises, when (exit branch **N** of decision step **235)** the *i*-th phase index is equal to the last phase index (*i.e.,* the A phase index), which means that action nodes **220-230** have been reiterated for each *i*-th phase index (and, hence, that the variable *ξᵢ* contains A position information *z_{αᵢ},* and the variable *rᵢ* contains A (maximum) correlation values *corrᵢ*(*z_{αᵢ}*)), determining the minimum index σ among the smallest indexes *αᵢ* stored in the variable *ξᵢ* and associated with the maximum correlation values stored in the variable *rᵢ* (action node **245),** *i.e.:* $σ = min \left\{arg\left[{max}_{i}\left({r}_{i}\right)\right]\right\}$

According to an embodiment, the MP reconstruction procedure **200** comprises selecting the atom, among the atoms of the dictionary *D,* which is associated with the position information *z_{αᵢ}* and phase shift *ζᵢ* corresponding to the minimum index σ (action node **250),** *i.e.:* ${g}_{\left(j, {α}_{σ}, σ\right)} = cos \left({κ}_{j} {z}_{{α}_{σ}}+{ζ}_{σ}\right)$

As should be understood, considering the minimum index σ among the smallest indexes *αᵢ* stored in the variable *ξᵢ* essentially means determining the atom, among the atoms providing maximum correlation values, associated with lowest phase component, whereby each atom is selected, among the dictionary of atoms, as the atom having highest correlation with the residual and lowest phase component.

According to an embodiment, the MP reconstruction procedure **200** comprises adding the selected atom *g*_{(j,α_{σ},σ)} to an output atom set Ω (Ω = Ω ∪ {*cos*(*κⱼ z_{α_{σ}} + ζ_{σ}*)} adapted to contain the selected atom(s) the combination of which provides the approximated interference signal, adding the corresponding position information *z_{α_{σ}}* to an output position vector *P* adapted to contain the estimated positions of the *S* sample reflectors, and adding the corresponding reflectivity information *r_{σ}* to an output reflectivity vector *R* adapted to contain the estimated reflectivity of the *S* sample reflectors (action node **255).**

According to an embodiment, since the atoms are functions of time (see the time index *j*, with *j*= 1, ..., *q*), the output atom set Ω can be represented as a *q* X *S* matrix.

According to an embodiment, each one of the selected atom *g*_{(*j,α*_{σ},σ)}, the position information *z_{α_{σ}}* and the reflectivity information *r_{σ},* is added to the respective output structure (*i.e.,* the output atom set Ω , the output position vector *P* and the output reflectivity vector *R,* respectively) in a same *l*-th position (*e.g.,* among *S* available positions) corresponding to the *l*-th sample reflector under consideration.

According to an embodiment, the MP reconstruction procedure **200** comprises updating the residual *ρ* according to the selected atom (action node **260).** According to an embodiment, the updated residual *ρ* is determined based on a difference between the current residual (which, at the first running of the MP reconstruction procedure **200,** corresponds to the interference signal *Iⱼ* itself) and the selected atom, *i.e.:* ${ρ}_{j} = {ρ}_{j} - {r}_{σ} cos \left({κ}_{j} {z}_{{α}_{σ}}+{ζ}_{σ}\right)$

According to an embodiment, the MP reconstruction procedure **200** comprises, if (exit branch **Y** of decision step **265)** the *l*-th sample reflector index is lower than last sample reflector index (i.e., the *S* sample reflector index), determining the following sample reflector index (*i.e., l* = *l* + 1), action node **270)** and performing nodes **215-270** as such with such a following sample reflector index (as conceptually represented in the figure by loop connection between action node **270** and action node **215)** and with the updated residual.

According to an embodiment, when (exit branch **N** of decision step **265)** the l-th sample reflector index is equal to the last sample reflector index (*i.e.,* the S sample reflector index), which means that nodes **215-260** have been repeated for each *l*-th sample reflector index (and, hence, that the output atom set Ω contains *S* selected atoms each one associated with a respective sample reflector, the output position vector *P* contains S position information items each one associated with a respective sample reflector, and the output reflectivity vector *R* contains *S* reflectivity information items each one associated with a respective sample reflector) the MP reconstruction procedure **200** ends (action node **275),** for example with the output of the data structure Ω, *P*, *R.*

As should be understood, the data structure Ω, *P*, *R* identifies the approximated interference signal, and particularly the reflectivity and position information of the selected atoms the combination of which determines the approximated interference signal provide (or allow determining) the reflectivity and position associated with the sample reflector(s)) - which allows determining the ranging measurements and/or the image(s) of the sample **S** (such as a B-scan image and/or a C-scan image) including, or based on, the ranging measurements.

According to an embodiment, one or more additional techniques may complement the MP reconstruction procedure **200** to improve performance.

According to an embodiment, one or more post-processing techniques may complement the MP reconstruction procedure **200** to improve performance.

Just as an example, a post-processing technique based on reflectivity value linear transformation or based on reflectivity value power transformation may be used. These are examples of contrast enhancement algorithms that can be used in image processing systems.

In case of linear transformation, new reflectivity values *r̅ⱼ* are evaluated through a linear transformation starting from the estimated reflectivity values *rⱼ*, *i.e.:* ${\overline{r}}_{j} = {C}_{1} {r}_{j} + {C}_{0}$

In case of power transformation, new reflectivity values *r̅ⱼ* are evaluated through a power transformation starting from the estimated reflectivity values *rⱼ*, *i.e.:* ${\overline{r}}_{j} = {C}_{1} {{r}_{j}}^{{C}_{0}}$

In both cases *C*₁ and *C*₀ are real constants, to be determined a priori on the ground of the expected type of the detected interference signal.

Contrary to other approaches, such as approaches based on solving equation (8) in the Fourier domain, which are aimed at estimating a smooth, continuous reflectivity function, the MP reconstruction procedure **200** allows determining (or estimating) position and reflectivity of each sample reflector. This makes the MP reconstruction procedure **200** particularly, although not exclusively, suitable for ranging applications, where noise components in the detected interference signal are not negligible and the quality of the reflectivity estimate is determined by the tolerance to the noise components and by sample reflector position errors.

Examples of ranging applications in which the solution of the present disclosure can be used include, but are not limited to, laser welding monitoring applications, for monitoring (*e.g.,* in real-time) the formation of a welding hole obtained by laser welding. In these applications, distance and/or reflectivity measurements performed using the system **100** implementing the MP reconstruction procedure **200** may allow determining a depth and/or a shape of the welding hole during the welding process (for example, in order to evaluate a welding strength and/or real-time adjust one or more parameters of the welding process).

Other examples of ranging applications include, but are not limited to, manufacturing monitoring applications for monitoring (e.g., in real-time) an additive manufacturing process of a material (such as a melting process, a sintering process, a densification, or a smoothing process). In these applications, distance and/or reflectivity measurements performed using the system **100** implementing the MP reconstruction procedure **200** may allow determining a processing condition of the material (for example, determining that the material is fully processed) and/or a quality or accuracy of the processed material.

Other examples of ranging applications include, but are not limited to, obstacle monitoring applications, such as for static and/or moving obstacle detection, for example in autonomous driving scenarios.

The Applicant has evaluated the performance of the MP reconstruction procedure **200** by simulation, in particular by considering the error in the position of a single sample reflector with respect to the sweep bandwidth for different noise levels.

The parameters used in these simulations are the following:

| Image Parameters | | |
|---|---|---|
| Image depth | 0.3 | mm |
| Pulse half width | 2 | 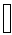 m |
| Refraction index | 1.2 | ---- |
| Pulses shape | Gaussian | ---- |

| Reconstruction Procedure Parameters | | |
|---|---|---|
| Depth step | 0.5 | 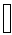 m |
| Postprocessing | NO | ---- |

| SS-OCT Parameters | | |
|---|---|---|
| A-Scan duration | 0.5 | 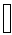 s |
| Sweep shape | Linear | ---- |
| Mid wavelength | 800 | mm |
| Sampling rate | 0.5 | ns |

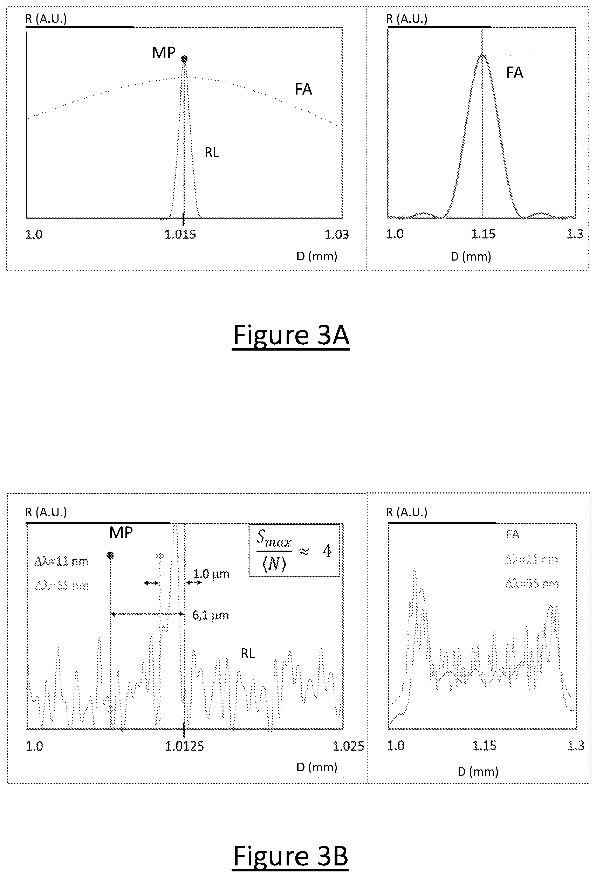

Examples of simulation results in the determination or estimate of the position of a single sample reflector for different noise conditions are shown in **Figures 3A** and **3B****.** In these figures, the abscissa axis reports the depth (expressed in mm) of the sample reflector (the depth of the sample reflector being denoted by D in these figures), whereas the ordinate axis reports the reflectivity (expressed in A.U.) of the sample reflector (the reflectivity of the sample reflector being denoted by R in these figures).

With reference to **Figure 3A****,** it shows an example of simulation results in the absence of noise. In this figure, both results from the MP reconstruction procedure (denoted by "MP" in the figure) and a Fourier - based reconstruction procedure (denoted by "FA" in the figure) are shown for the determination or estimate of the position of the sample reflector using a sweep bandwidth of 11 nm.

As visible in **Figure 3A****,** in the both the MP reconstruction procedure and the Fourier - based reconstruction procedure correctly identify the sample reflector (which is constituted by a very sharp reflectivity pulse, identified by RL in the figure), but the Fourier - based reconstruction procedure produces a large reflectivity pulse (with a single side width of about 58 µm) that can generate a practical difficulty in the individuation of the real position of the sample reflector. On the contrary, the MP reconstruction procedure produces a single point corresponding to the reflectivity pulse maximum, allowing a direct individuation of the real position of the sample reflector.

With reference to **Figure 3B****,** it shows an example of simulation results in the presence of high noise. In this figure, both results from the MP reconstruction procedure (denoted by "MP" in the figure) and the Fourier - based reconstruction procedure (denoted by "FA" in the figure) are shown for the determination or estimate of the position of the sample reflector considered in **Figure 3A** using two different sweep bandwidths Δλ: 11 nm and 55 nm. The noise average amplitude 〈*N*〉 is about 0.25 times the maximum signal *Sₘₐₓ,* and the noise standard deviation *σ_{N}* is about 0.12 times the maximum signal *Sₘₐₓ*.

As visible in **Figure 3B****,** the high noise level moves the position of the maximum signal *Sₘₐₓ*: this effect cannot be compensated, and it has to be included as a bias in the position estimate error. The noise induced error reduces as the sweep bandwidth increases, as it is shown in the figure, and in any case, it is small or relatively small.

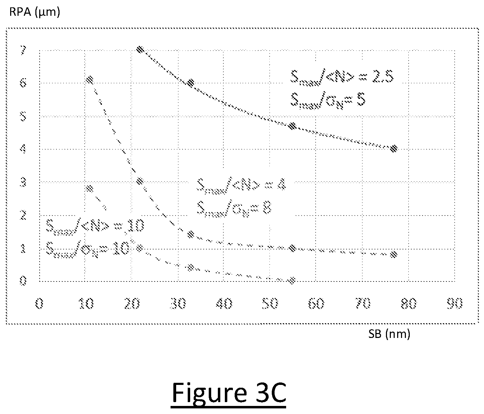

The performance of the MP reconstruction procedure in presence of a single sample reflector and with different noise levels is reported in **Figure 3C** for different sweep bandwidths and using the above simulation parameters. In this figure, the abscissa axis reports the sweep bandwidth (expressed in nm) of the sample reflector (the sweep bandwidth of the sample reflector being denoted by SB in the figure), whereas the ordinate axis reports the accuracy of the position (expressed in µm) of the sample reflector (the accuracy of the position of the sample reflector being denoted by RPA *- i.e., "Reflector Position Accuracy"* - in the figure).

As visible in **Figure 3C****,** for decreasing *Sₘₐₓ*/〈*N*〉, the accuracy of the position of the sample reflector increases as the sweep bandwidth increases.

As also visible in **Figure 3C****,** the MP reconstruction procedure exhibits a very good accuracy of the position of the sample reflector for high noise levels and low sweep bandwidth, which is indicative of a very good noise tolerance of the MP reconstruction procedure.

Naturally, in order to satisfy local and specific requirements, a person skilled in the art may apply to the disclosure described above many logical and/or physical modifications and alterations. More specifically, although the present disclosure has been described with a certain degree of particularity with reference to preferred embodiments thereof, it should be understood that various omissions, substitutions and changes in the form and details as well as other embodiments are possible.

In particular, different embodiments of the disclosure may even be practiced without the specific details set forth in the preceding description for providing a more thorough understanding thereof; on the contrary, well-known features may have been omitted or simplified in order not to encumber the description with unnecessary details. Moreover, it is expressly intended that specific elements and/or MP reconstruction procedure steps described in connection with any disclosed embodiment of the disclosure may be incorporated in any other embodiment.

More specifically, the system may have a different structure or include equivalent components. Moreover, any component of the system may be separated into several elements, or two or more components may be combined into a single element; furthermore, each component can be replicated to support the execution of the corresponding operations in parallel. It should also be noted that (unless otherwise indicated) any interaction between different components generally does not need to be continuous and may be either direct or indirect through one or more intermediaries.

Moreover, the present disclosure lends itself to be implemented through an equivalent procedure (by using similar steps, removing some steps being not essential, or adding further optional steps); moreover, the steps may be performed in different order, concurrently or in an interleaved way (at least partly).

Furthermore, although in the foregoing explicit reference has been made to a Matching Pursuit based - reconstruction procedure, this should not be construed limitatively. In this respect, any procedure falling within the basic principles of the present disclosure (*i.e.,* determining reflectivity and/or position associated with the sample reflector(s) (or at least a subset thereof) by casting the problem of determining, from the detected interference signal, the sample reflector(s) reflectivity and/or position as a compress sensing problem, and by solving the compress sensing problem according to a suitable compress sensing problem solving approach/algorithm) may be envisaged, as long as it falls within the scope of the invention as defined in the appended claims.

## Claims

1. A Swept-Source Optical Coherence Tomography (SS-OCT) system **(100)** comprising:
- a light source **(105)** configured to generate a coherent light signal;
- an optical interferometer **(110)** configured to divide the coherent light signal into a reference forward signal directed to a reference arm (**110_{R}**) of the optical interferometer leading to a reference reflector **(R),** and into a sample forward signal directed to a sample arm (**110_{S}**) of the optical interferometer leading to a sample **(S)** including at least one sample reflector;
- an optical detector **(115)** configured to detect an interference signal generated by a combination of a reference return signal returning from the reference arm after reflection by the reference reflector and a sample return signal returning from the sample arm after reflection by the sample, and
- a processing unit **(125)** configured to:
- determine an approximated interference signal associated with the sample as a combination of a number of functions of a dictionary of functions, said number of functions being equal to a number of said at least one sample reflector, wherein each function in the dictionary of functions describes the interference signal as a sinusoidal function having amplitude and argument respectively associated with reflectivity and position information, the arguments of the sinusoidal functions comprising a plurality of phase components independent of an optical absolute frequency of the coherent light signal, and wherein each function of said number of functions is associated with a respective one of said at least one sample reflector and is selected from said dictionary of functions to minimize a difference between the interference signal and the approximated interference signal, and
- determine at least one between reflectivity and position associated with one or more of the at least one sample reflector based on the reflectivity and position information of the selected function the combination of which determines the approximated interference signal.

2. The SS-OCT system **(100)** according to claim 1, wherein each function of said number of functions is selected at a respective one of a number of iterations equal to said number of at least one sample reflector, and wherein each function of said number of functions is selected, at the respective iteration, as the function, in the dictionary of functions, having highest correlation with a residual indicative of a difference between the interference signal and a combination of all the functions selected in preceding iterations.

3. The SS-OCT system **(100)** according to claim 2, wherein each function of said number of functions is selected, at the respective iteration, as the function, in the dictionary of functions, having highest correlation with the residual and lowest phase component.

4. The SS-OCT system **(100)** according to any of the preceding claims, wherein the processing unit **(125)** is configured to determine the approximated interference signal based on Matching Pursuit algorithm.

5. The SS-OCT system **(100)** according to any of the preceding claims, wherein the at least one sample reflector comprises a single sample reflector.

6. The SS-OCT system **(100)** according to any of the preceding claims, wherein the processing unit **(125)** is further configured to provide one or more ranging measurements of the sample (**S**) based on the position and/or reflectivity information associated with each one of said at least one sample reflector.

7. The SS-OCT system **(100)** according to claim 6, wherein said one or more ranging measurements comprises distance and/or reflectivity measurements for laser welding monitoring applications and/or for sintering monitoring applications and/or for obstacle monitoring applications.

8. A method **(200)** for processing an interference signal generated by a combination of a reference return signal returning from a reference arm of an optical interferometer after reflection, by a reference reflector located at the reference arm, of a reference forward signal resulting from a splitting of a coherent light signal, and a sample return signal returning from a sample arm of the optical interferometer after reflection, by at least one sample reflector of a sample located at the sample arm, of a sample forward signal resulting from said splitting of the coherent light signal, the method comprising:
- determining **(220-250)** an approximated interference signal associated with the sample as a combination of a number of functions of a dictionary of functions, said number of functions being equal to a number of said at least one sample reflector, wherein each function in the dictionary of functions describes the interference signal as a sinusoidal function having amplitude and argument respectively associated with reflectivity and position information, the arguments of the sinusoidal functions comprising a plurality of phase components independent of an optical absolute frequency of the coherent light signal, and wherein each function of said number of functions is associated with a respective one of said at least one sample reflector and is selected from said dictionary of functions to minimize a difference between the interference signal and the approximated interference signal, and
- determining **(255)** at least one between reflectivity and position associated with one or more of the at least one sample reflector based on the reflectivity and position information of the selected functions the combination of which determines the approximated interference signal.

## Patentansprüche

1. Swept-Source-Optische-Kohärenztomographie-System (SS-OCT-System) (**100**), umfassend:
- eine Lichtquelle (**105**), die dazu konfiguriert ist, ein kohärentes Lichtsignal zu erzeugen;
- ein optisches Interferometer (**110**), das dazu konfiguriert ist, das kohärente Lichtsignal in ein Referenz-Hinlaufsignal aufzuteilen, das zu einem Referenzarm (**110_{R}**) des optischen Interferometers geleitet wird, der zu einem Referenzreflektor (**R**) führt, und in ein Proben-Hinlaufsignal aufzuteilen, das zu einem Probenarm (**110_{S}**) des optischen Interferometers geleitet wird, der zu einer Probe (**S**) führt, welche wenigstens einen Probenreflektor umfasst;
- einen optischen Detektor (**115**), der dazu konfiguriert ist, ein Interferenzsignal zu detektieren, das durch eine Kombination eines Referenz-Rücklaufsignals, das nach Reflexion an dem Referenzreflektor aus dem Referenzarm zurückkehrt, und eines Proben-Rücklaufsignals, das nach Reflexion an der Probe aus dem Probenarm zurückkehrt, erzeugt wird; und
- eine Verarbeitungseinheit (**125**), die dazu konfiguriert ist:
- ein der Probe zugeordnetes approximiertes Interferenzsignal als Kombination einer Anzahl von Funktionen eines Funktionswörterbuchs zu bestimmen, wobei die Anzahl der Funktionen gleich einer Anzahl des wenigstens einen Probenreflektors ist, wobei jede Funktion des Funktionswörterbuchs das Interferenzsignal als eine Sinusfunktion beschreibt, deren Amplitude bzw. Argument jeweils mit Reflexionsgrad- und Positionsinformationen verknüpft sind, wobei die Argumente der Sinusfunktionen eine Mehrzahl von Phasenkomponenten umfassen, die unabhängig von einer absoluten optischen Frequenz des kohärenten Lichtsignals sind, und wobei jede Funktion der Anzahl von Funktionen einem jeweiligen Probenreflektor des wenigstens einen Probenreflektors zugeordnet ist und aus dem Funktionswörterbuch ausgewählt wird, um eine Differenz zwischen dem Interferenzsignal und dem approximierten Interferenzsignal zu minimieren; und
- wenigstens eine von Reflexionsgrad und Position zu bestimmen, die einem oder mehreren des wenigstens einen Probenreflektors zugeordnet sind, auf der Grundlage der Reflexionsgrad- und Positionsinformationen der ausgewählten Funktion, deren Kombination das approximierte Interferenzsignal bestimmt.

2. SS-OCT-System (**100**) nach Anspruch 1, wobei jede Funktion der Anzahl von Funktionen in einer jeweiligen Iteration einer Anzahl von Iterationen ausgewählt wird, die der Anzahl des wenigstens einen Probenreflektors entspricht, und wobei jede Funktion der Anzahl von Funktionen in der jeweiligen Iteration als diejenige Funktion des Funktionswörterbuchs ausgewählt wird, die die höchste Korrelation mit einem Residuum aufweist, das eine Differenz zwischen dem Interferenzsignal und einer Kombination aller in vorhergehenden Iterationen ausgewählten Funktionen angibt.

3. SS-OCT-System (**100**) nach Anspruch 2, wobei jede Funktion der Anzahl von Funktionen in der jeweiligen Iteration als diejenige Funktion des Funktionswörterbuchs ausgewählt wird, die die höchste Korrelation mit dem Residuum und die niedrigste Phasenkomponente aufweist.

4. SS-OCT-System (**100**) nach einem der vorhergehenden Ansprüche, wobei die Verarbeitungseinheit (**125**) dazu konfiguriert ist, das approximierte Interferenzsignal auf der Grundlage eines Matching-Pursuit-Algorithmus zu bestimmen.

5. SS-OCT-System (**100**) nach einem der vorhergehenden Ansprüche, wobei der wenigstens eine Probenreflektor einen einzelnen Probenreflektor umfasst.

6. SS-OCT-System (**100**) nach einem der vorhergehenden Ansprüche, wobei die Verarbeitungseinheit (**125**) ferner dazu konfiguriert ist, eine oder mehrere Abstandsmessungen der Probe (**S**) auf der Grundlage der Positions- und/oder Reflexionsgradinformationen bereitzustellen, die jedem des wenigstens einen Probenreflektors zugeordnet sind.

7. SS-OCT-System (**100**) nach Anspruch 6, wobei die eine oder mehreren Abstandsmessungen Distanz- und/oder Reflexionsgradmessungen für Anwendungen zur Überwachung des Laserschweißens und/oder zur Überwachung des Sinterns und/oder zur Hindernisüberwachung umfassen.

8. Verfahren (**200**) zum Verarbeiten eines Interferenzsignals, das durch eine Kombination eines Referenz-Rücklaufsignals erzeugt wird, das nach Reflexion eines aus einer Aufteilung eines kohärenten Lichtsignals resultierenden Referenz-Hinlaufsignals an einem in einem Referenzarm eines optischen Interferometers angeordneten Referenzreflektor aus dem Referenzarm zurückkehrt, und eines Proben-Rücklaufsignals, das nach Reflexion eines aus der Aufteilung des kohärenten Lichtsignals resultierenden Proben-Hinlaufsignals an wenigstens einem Probenreflektor einer in einem Probenarm des optischen Interferometers angeordneten Probe aus dem Probenarm zurückkehrt, wobei das Verfahren umfasst:
- Bestimmen (**220-250**) eines der Probe zugeordneten approximierten Interferenzsignals als Kombination einer Anzahl von Funktionen eines Funktionswörterbuchs, wobei die Anzahl der Funktionen gleich einer Anzahl des wenigstens einen Probenreflektors ist, wobei jede Funktion des Funktionswörterbuchs das Interferenzsignal als eine Sinusfunktion beschreibt, deren Amplitude bzw. Argument jeweils mit Reflexionsgrad- und Positionsinformationen verknüpft sind, wobei die Argumente der Sinusfunktionen eine Mehrzahl von Phasenkomponenten umfassen, die unabhängig von einer absoluten optischen Frequenz des kohärenten Lichtsignals sind, und wobei jede Funktion der Anzahl von Funktionen einem jeweiligen Probenreflektor des wenigstens einen Probenreflektors zugeordnet ist und aus dem Funktionswörterbuch ausgewählt wird, um eine Differenz zwischen dem Interferenzsignal und dem approximierten Interferenzsignal zu minimieren; und
- Bestimmen (**255**) wenigstens einer von Reflexionsgrad und Position, die einem oder mehreren des wenigstens einen Probenreflektors zugeordnet sind, auf der Grundlage der Reflexionsgrad- und Positionsinformationen der ausgewählten Funktionen, deren Kombination das approximierte Interferenzsignal bestimmt.

## Revendications

1. Système (**100**) de tomographie par cohérence optique à source accordable (SS-OCT), comprenant :
- une source lumineuse (**105**) configurée pour générer un signal lumineux cohérent ;
- un interféromètre optique (**110**) configuré pour diviser le signal lumineux cohérent en un signal aller de référence dirigé vers un bras de référence (**110_{R}**) de l'interféromètre optique conduisant à un réflecteur de référence (**R**), et en un signal aller d'échantillon dirigé vers un bras d'échantillon (**110_{S}**) de l'interféromètre optique conduisant à un échantillon (**S**) comprenant au moins un réflecteur d'échantillon ;
- un détecteur optique (**115**) configuré pour détecter un signal d'interférence généré par une combinaison d'un signal retour de référence revenant du bras de référence après réflexion par le réflecteur de référence et d'un signal retour d'échantillon revenant du bras d'échantillon après réflexion par l'échantillon ; et
- une unité de traitement (**125**) configurée pour :
- déterminer un signal d'interférence approximé associé à l'échantillon en tant que combinaison d'un nombre de fonctions d'un dictionnaire de fonctions, ledit nombre de fonctions étant égal à un nombre dudit au moins un réflecteur d'échantillon, où chaque fonction du dictionnaire de fonctions décrit le signal d'interférence comme une fonction sinusoïdale ayant une amplitude et un argument respectivement associés à des informations de réflectivité et de position, les arguments des fonctions sinusoïdales comprenant une pluralité de composantes de phase indépendantes d'une fréquence optique absolue du signal lumineux cohérent, et où chaque fonction dudit nombre de fonctions est associée à un réflecteur d'échantillon respectif dudit au moins un réflecteur d'échantillon et est sélectionnée à partir dudit dictionnaire de fonctions de manière à minimiser une différence entre le signal d'interférence et le signal d'interférence approximé ; et
- déterminer au moins l'une parmi une réflectivité et une position associées à un ou plusieurs desdits au moins un réflecteur d'échantillon sur la base des informations de réflectivité et de position de la fonction sélectionnée dont la combinaison détermine le signal d'interférence approximé.

2. Système (**100**) SS-OCT selon la revendication 1, où chaque fonction dudit nombre de fonctions est sélectionnée au cours d'une itération respective d'un nombre d'itérations égal audit nombre dudit au moins un réflecteur d'échantillon, et où chaque fonction dudit nombre de fonctions est sélectionnée, lors de l'itération respective, comme étant la fonction, dans le dictionnaire de fonctions, présentant la corrélation la plus élevée avec un résidu représentatif d'une différence entre le signal d'interférence et une combinaison de toutes les fonctions sélectionnées au cours des itérations précédentes.

3. Système (**100**) SS-OCT selon la revendication 2, où chaque fonction dudit nombre de fonctions est sélectionnée, lors de l'itération respective, comme étant la fonction, dans le dictionnaire de fonctions, présentant la corrélation la plus élevée avec le résidu et la composante de phase la plus faible.

4. Système (**100**) SS-OCT selon l'une quelconque des revendications précédentes, où l'unité de traitement (**125**) est configurée pour déterminer le signal d'interférence approximé sur la base d'un algorithme de Matching Pursuit.

5. Système (**100**) SS-OCT selon l'une quelconque des revendications précédentes, où ledit au moins un réflecteur d'échantillon comprend un unique réflecteur d'échantillon.

6. Système (**100**) SS-OCT selon l'une quelconque des revendications précédentes, où l'unité de traitement (**125**) est en outre configurée pour fournir une ou plusieurs mesures de télémétrie de l'échantillon (**S**) sur la base des informations de position et/ou de réflectivité associées à chacun dudit au moins un réflecteur d'échantillon.

7. Système (**100**) SS-OCT selon la revendication 6, où lesdites une ou plusieurs mesures de télémétrie comprennent des mesures de distance et/ou de réflectivité pour des applications de surveillance du soudage laser et/ou des applications de surveillance du frittage et/ou des applications de surveillance d'obstacles.

8. Procédé (**200**) de traitement d'un signal d'interférence généré par une combinaison d'un signal retour de référence revenant d'un bras de référence d'un interféromètre optique après réflexion, par un réflecteur de référence situé sur le bras de référence, d'un signal aller de référence résultant d'une division d'un signal lumineux cohérent, et d'un signal retour d'échantillon revenant d'un bras d'échantillon de l'interféromètre optique après réflexion, par au moins un réflecteur d'échantillon d'un échantillon situé sur le bras d'échantillon, d'un signal aller d'échantillon résultant de ladite division du signal lumineux cohérent, ledit procédé comprenant :
- déterminer (**220-250**) un signal d'interférence approximé associé à l'échantillon en tant que combinaison d'un nombre de fonctions d'un dictionnaire de fonctions, ledit nombre de fonctions étant égal à un nombre dudit au moins un réflecteur d'échantillon, où chaque fonction du dictionnaire de fonctions décrit le signal d'interférence comme une fonction sinusoïdale ayant une amplitude et un argument respectivement associés à des informations de réflectivité et de position, les arguments des fonctions sinusoïdales comprenant une pluralité de composantes de phase indépendantes d'une fréquence optique absolue du signal lumineux cohérent, et où chaque fonction dudit nombre de fonctions est associée à un réflecteur d'échantillon respectif dudit au moins un réflecteur d'échantillon et est sélectionnée à partir dudit dictionnaire de fonctions de manière à minimiser une différence entre le signal d'interférence et le signal d'interférence approximé ; et
- déterminer (**255**) au moins l'une parmi une réflectivité et une position associées à un ou plusieurs desdits au moins un réflecteur d'échantillon sur la base des informations de réflectivité et de position des fonctions sélectionnées dont la combinaison détermine le signal d'interférence approximé.
